# EUROPÄISCHE PATENTSCHRIFT

(11) **EP 1 277 644 B1**
(45) Veröffentlichungstag und Bekanntmachung des Hinweises auf die Patenterteilung: **02.04.2008**
(21) Anmeldenummer: 01117499.2
(22) Anmeldetag: 20.07.2001
(51) Int. Cl.: B62B 9/28, B62K 27/12

(54) **Kinderwagenanhänger**
Trailer for a perambulator
Remorque pour voiture d'enfant

(43) Veröffentlichungstag der Anmeldung: 22.01.2003
(73) Patentinhaber: Lamprecht AG, 8050 Zürich (CH)
(72) Erfinder: Haeggberg, Christian, 9602 Bazenheid (CH)
(74) Vertreter: Müller, Christoph Emanuel

(56) Entgegenhaltungen:
- DE-U- 29 916 012
- GB-A- 1 346 032
- GB-A- 2 328 907
- US-A- 3 000 645
- US-A- 5 653 460

## Beschreibung

Die Erfindung bezieht sich auf einen Anhänger zum Mitführen von mindestens einem Kind, der an einem Kinderwagen befestigbar ist und der ein Fahrwerk mit wenigstens einem Rad, einen Rahmen und eine Befestigungsanordnung zum Befestigen an den Kinderwagen aufweist.

Anhänger zum Mitführen von mindestens einem Kind, die an einem Kinderwagen befestigbar sind, sind bereits allgemein bekannt. Einen derartigen Anhänger beinhaltet beispielsweise die Europäischen Patentanmeldung EP 0 911 251 A1.

Es handelt es sich dabei um einen Kinderwagenanhänger, der an einen Kinderwagen montierbar ist und der eine Plattform besitzt, an der ein Fahrwerk mit zwei Rädern und eine Kupplungseinrichtung zum Verbinden mit einer Radachse eines Kinderwagens angeordnet sind. Auf dessen Plattform kann ein Kind stehend mitfahren.

Zum Sitzen erweisen sich die Plattformen der Kinderwagenanhänger aufgrund der begrenzten Grösse und der tiefen Sitzposition als ungeeignet. Der Kinderwagenanhänger mit Plattform wird mittig hinter dem Kinderwagen gezogen. Die Sitzposition wäre gegenüber der Stehposition von Vorteil da der Transport des Kindes ermüdungsfrei erfolgt. Ausserdem ist in der Sitzposition die Sturzgefahr und das Verletzungsrisiko geringer.

Das Bewegen des Kinderwagens wird dadurch unhandlich, da sich der Kinderwagenanhänger mit Plattform sowohl mit als auch ohne Kind im Beinbereich des Bewegenden befindet und damit das Gehen erschwert.

Die DE 299 16 012 U1 beschreibt einen Anhänger für einen Kinderwagen zum Befördern von Kleinkindern gemäß dem Oberbegriff des Anspruchs 1. Der mit Rollen oder Rädern versehene Anhänger ist mittig an einen Schiebbügel des Kinderwagens koppelbar und umfasst eine Rahmenkonstruktion, welche mit einem Kindersitz versehen ist.

In der GB 2328907 wir ein brettförmiger Anhänger mit vier Rädern gezeigt, welcher mit einer Kupplungsstange an eine Querstrebe des Kinderwagens montierbar ist und mittig hinter dem Kinderwagen hergezogen wird.

Die der Erfindung zugrundeliegende Aufgabe besteht darin, die erwähnten Nachteile zu vermeiden, insbesondere also in der Realisierung eines Kinderwagenanhängers mit einer Sitzmöglichkeit für mindestens ein Kind.
Darüber hinaus soll der Transport des Kinderwagenanhängers bei der Mitführung ohne Kind handlicher vonstatten gehen.

Diese Aufgabe wird bei einem Anhänger der eingangs genannten Art durch die Merkmale des Anspruchs 1 gelöst,

Die Erfindung zeichnet sich dadurch aus, dass der Anhänger im wesentlichen eine vertikale Montagelage, d.h. eine Lage, in der das Kind aufrecht sitzen kann, erlaubt.

Der Rahmen des Anhängers kann auf verschiedene Weise ausgeführt sein, z.B. einstückig aus Holz oder Kunststoff aber auch ähnlich wie ein Fahrradrahmen aus Stahlrohr.

Der Haltegriff und der Sitz sind in Bezug auf das Fahrwerk so übereinander angeordnet, dass das Kind bequem in aufrechter Sitzposition transportiert werden kann. Um eine bequeme Sitzposition zu erlauben, verläuft die Verbindungslinie zwischen Fahrwerk und Haltegriff in Montagelage des Anhängers gegenüber der Vertikalen unter einem Winkel von weniger als 45°, vorzugsweise 35 - 45°.

Zur Realisierung einer komfortablen Sitzposition entspricht die Position des Sitzes vorzugsweise der Hälfte der Gesamthöhe des Anhängers. Zur Anpassung an verschieden grosse Kinder erweist sich eine einstellbare Höhe des Sitzes als sehr vorteilhaft.

Die Länge des Sitzes ist für mindestens ein Kind ausgeführt. Es ist aber auch denkbar die Länge des Sitzes so zu gestalten, dass zwei Kinder darauf Platz finden.

Der Haltegriff zum Festhalten während der Fahrt ist am oberen Ende des Anhängers vorgesehen. Er kann vorteilhaft zur Anpassung an verschieden grosse Kinder in der Höhe verstellbar ausgeführt sein. Die Befestigungsvorrichtung ist vorteilhaft oberhalb der Höhe des Sitzes vorgesehen. Sie kann etwa auf der Höhe des Haltegriffs oder auch darüber angeordnet sein.

Zum Abstützen der Füsse ist eine Fussstütze am unteren Ende des Anhängers vorgesehen. Die Fussstütze kann entweder fest oder ebenfalls zur Anpassung an verschieden grosse Kinder in der Höhe verstellbar ausgeführt sein.

Sie kann auch in einer weiteren Ausführungsform des erfindungsgemässen Anhängers als Verlängerung der Radachse ausgebildet sein.

Zur Befestigung des Kinderwagenanhängersitzes dient eine Befestigungsvorrichtung, die an mindestens einem Rahmenelement des Kinderwagens montierbar ist. Diese Befestigungsvorrichtung ist zur schnellen Montage vorzugsweise als Schnellspanneinrichtung ausgeführt. Daher kann die Befestigungsvorrichtung rasch entfernt werden, z.B. wenn der Kinderwagen zusammengeklappt werden soll.

Die Kupplungseinrichtung zum Verbinden des Kinderwagens mit dem Anhänger ist so an dem Kinderwagen befestigbar bzw. befestigt, dass der Anhänger seitlich hinter dem Kinderwagen mitgeführt wird.

Das Bewegen des Kinderwagens wird dadurch handlicher, da der Anhänger durch die seitliche Anordnung hinter dem Kinderwagen sich ausserhalb des Beinbereiches des Bewegenden befindet.

Das an der Kupplungseinrichtung befindliche erste Gelenk ermöglicht eine vertikal zur Bewegungsrichtung des Kinderwagens durchführbare Schwenkbewegung des Kinderwagenänhängersitzes. Damit können Wegunebenheiten ausgeglichen werden.

Der Drehpunkt des Gelenkes befindet sich an der zum Kinderwagen gerichteten Seite der Kupplungseinrichtung.

Eine Rückstellfeder erweist sich zum Anheben des unbelasteten Kinderwagenanhängersitzes und damit zum leichteren Bewegen des Kinderwagens als vorteilhaft.

Das an der Kupplungseinrichtung befindliche zweite Gelenk ermöglicht eine nach beiden Seiten quer zur Bewegungsrichtung des Kinderwagens durchführbare Bewegung des Kinderwagenanhängersitzes.

Mit dieser Bewegung lässt sich der Kinderwagenanhängersitz vor den Kinderwagen und parallel zum Kinderwagen schwenken. Dies ermöglicht einen einfachen Transport bei Nichtbenutzung und erlaubt einfaches Fahren von Kurven. Eine Halterung dient zum Fixieren des Kinderwagenanhängersitzes in der jeweiligen Transportposition.

Der Drehpunkt des Gelenkes befindet sich an der zum Kinderwagenanhängersitzes befindlichen Seite der Kupplungseinrichtung. Mit den vorgenannten Ausführungsformen ist es möglich, mindestens ein zusätzliches Kind auf einem Kinderwagenanhänger sitzend zu transportieren.

Die Erfindung wird nachfolgend anhand einer Zeichnung beispielsweise näher erläutert. Dabei zeigen:
- Figur 1: Ansicht des erfindungsgemässen Anhängers in der seitlichen Perspektive,
- Figur 2: Ansicht der Kupplungseinrichtung mit dem ersten und dem zweiten Gelenk,
- Figur 3: Ansicht des erfindungsgemässen Anhängers in Ruhestellung,
- Figur 4: Schematische Darstellung von Sitzposition und der Positionen von Haltegriff und Fussstütze, und
- Figur 5: Alternative Ausgestaltung der Fussstütze und des Sitzes.

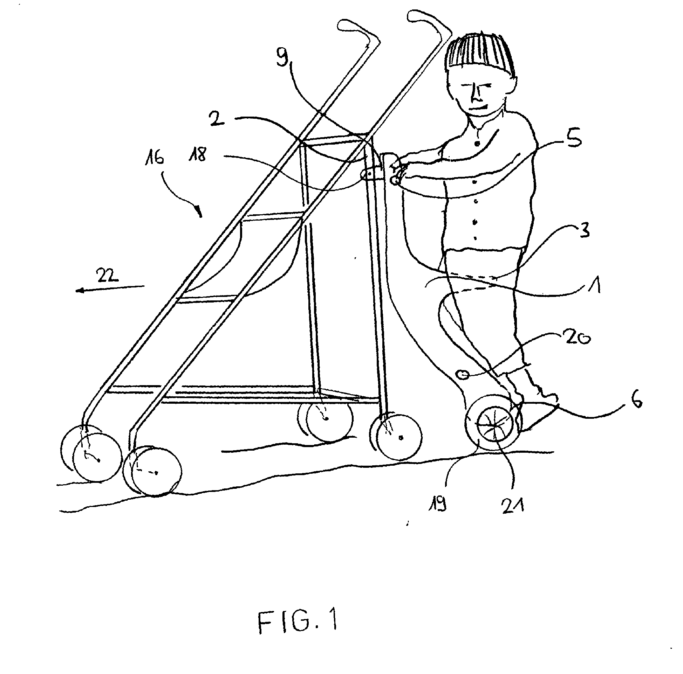

Figur 1 zeigt in schematischer Darstellung ein Ausführungsbeispiel eines Kinderwagenanhängers zum Mitführen von mindestens einem Kind in sitzender Position, der an einem Kinderwagen 16 befestigbar ist und der ein Fahrwerk 6 mit wenigstens einem Rad 19, einen Rahmen 1 und eine Befestigungsanordnung 18 zum Befestigen an den Kinderwagen 16 aufweist in der seitlichen Perspektive.

Der Anhänger enthält einen Sitz 3, einen Haltegriff 5, eine Fussstütze 20, ein Rad 19 und eine Kupplungseinrichtung 9. Der Sitz 3 ist vorzugsweise nach innen gebogen und entgegen der Bewegungsrichtung 22 des Kinderwagens 16 ausgebildet. Der Sitz 3 ist vorzugsweise länglich ausgebildet und bietet Platz für ein Kind. Es ist aber auch denkbar einen Tandemsitz für zwei Kinder vorzusehen.

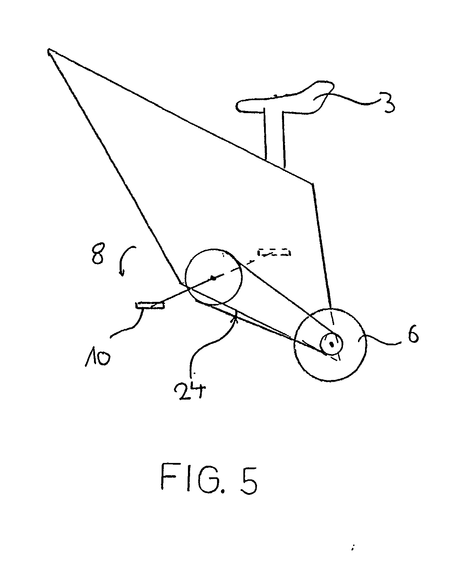

In Figur 5 ist in einer weiteren Ausführungsvariante ein breiterer Sitz 3 in Form eines Fahrradsattels gezeigt. Die Fussstützen sind in dieser Ausführungsvariante als Pedale 10 ausgebildet in einer Drehbewegung 8 bewegbar und über eine Kette 24 mit dem Fahrwerk 6 verbunden.

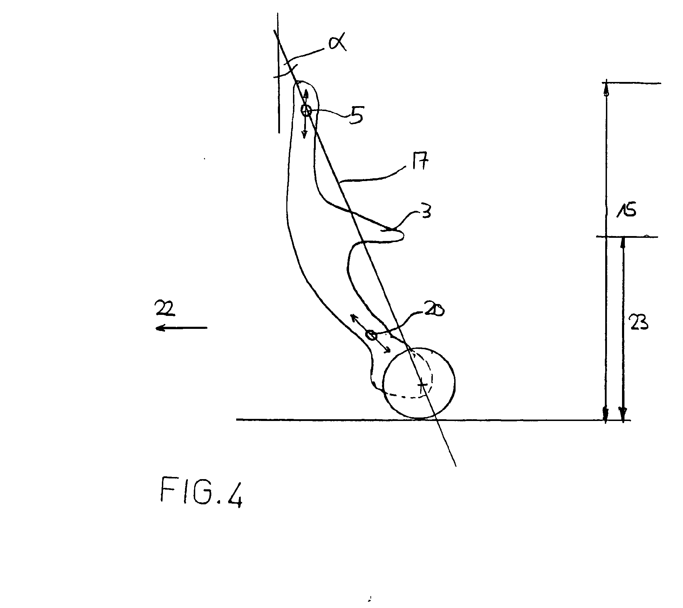

Die Höhe 23 des Sitzes 3 in Figur 1 und Figur 4 entspricht circa der Hälfte der Gesamthöhe 15 des Anhängers . Der Haltegriff 5 befindet sich am oberen Ende des Anhängers und die Fussstütze 20 am unteren Ende. Sowohl der Haltegriff 5 als auch die Fussstütze 20 sind vorzugsweise in Pfeilrichtung in der Höhe verstellbar, um eine optimale Sitzposition für verschieden grosse Kinder zu gewährleisten. Anstatt der Verstellung der Höhe des Haltegriffes 5 und der Fussstütze 20 ist auch eine Höhenverstellung des Sitzes 3 denkbar.

Die Anordnung von Sitz 3 , Haltegriff 5 und Fussstütze 20 ist in Figur 4 gezeigt. Der Haltegriff 5 ist derart in Bewegungsrichtung 22 des Kinderwagens 16 vor dem Fahrwerk 6 angeordnet, dass die Verbindungslinie 17 zwischen Fahrwerk 6 und Haltegriff 5 unter einem Winkel α zur Vertikalen von weniger als 45° verläuft. Diese Anordnung von Sitz 3 , Haltegriff 5 und Fussstütze 20 ermöglicht eine aufrechte Sitzposition.

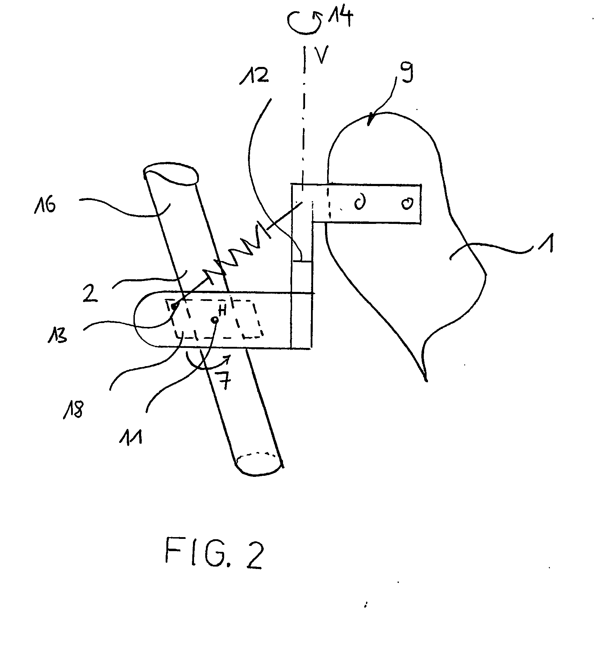

Die Kupplungseinrichtung 9 dient zum Verbinden eines Kinderwagenanhängers mit einem Kinderwagen 16. Die Kupplungseinrichtung 9, in Figur 2 dargestellt, besteht aus einer Befestigungsvorrichtung 18 und einem ersten und einem zweiten Gelenk (11 bzw. 12).

Mit Hilfe der Befestigungsvorrichtung 18 wird der Kinderwagenanhänger an mindestens ein Rahmenelement 2 des Kinderwagens 16 montiert. Diese Befestigungsvorrichtung 18 ist zur schnellen Montage vorzugsweise als Schnellspanneinrichtung ausgeführt.

Das an der Kupplungseinrichtung 9 befindliche erste Gelenk 11 ermöglicht eine um eine Horizontalachse H durchführbare Schwenkbewegung 7 in Richtung des Kinderwagenanhängers. Diese Bewegung dient zum Ausgleich von Wegunebenheiten.

Der Drehpunkt des ersten Gelenkes 11 befindet sich vorzugsweise an der zum Kinderwagen 16 gerichteten Seite der Kupplungseinrichtung 9. Zur leichteren Bewegung eines ungenutzten und damit unbelasteten Kinderwagenanhängers dient eine Rückstellfeder 13, die den Kinderwagenanhänger anhebt.

Das an der Kupplungseinrichtung 9 befindliche zweite Gelenk 12 ermöglicht eine nach beiden Seiten quer zur Bewegungsrichtung 22 des Kinderwagens 16 durchführbare Bewegung 14 um eine vertikale Achse V.

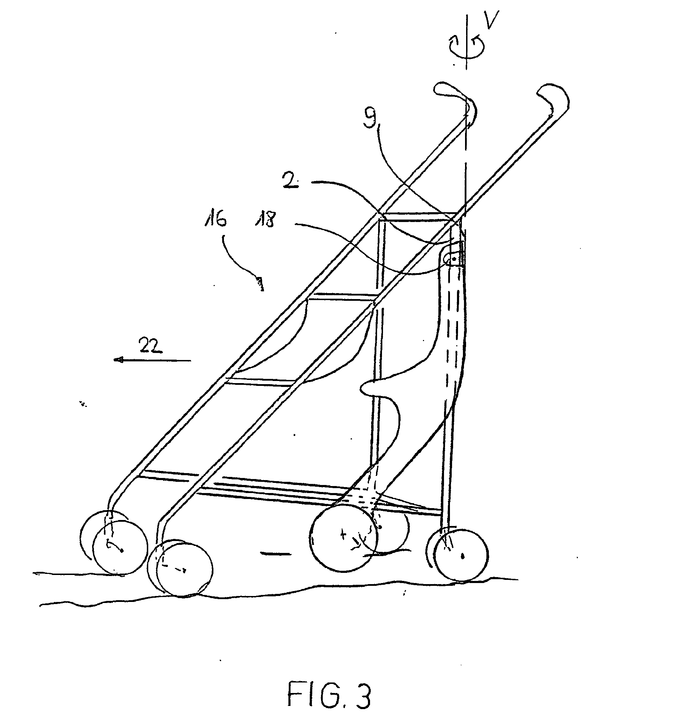

Ein ungenutzter Kinderwagenanhänger lässt sich damit neben den Kinderwagen 16 und parallel zum Kinderwagen 16 um die Achse V in eine Ruhestellung schwenken. Dies ermöglicht einen einfachen Transport bei Nichtbenutzung. Die Ruhestellung des Kinderwagenanhängers 16 im ungenutzten Zustand zeigt Figur 3.

Eine nicht näher dargestellte Halterung dient zum Fixieren des Kinderwagenanhängers in der Ruhestellung.

Der Drehpunkt des zweiten Gelenkes 12 befindet sich an der zum Kinderwagenanhänger gerichteten Seite der Kupplungseinrichtung 9.

## Patentansprüche

1. Anhänger zum Mitführen von mindestens einem Kind, der an einem Kinderwagen (16) befestigbar ist und der ein Fahrwerk (6) mit wenigstens einem Rad (19), einen Rahmen (1) und eine Befestigungsanordnung (18) zum Befestigen an den Kinderwagen (16) aufweist, wobei der Anhänger mit dem Rahmen (2) des Kinderwagens (16) verbindbar ist, einen Sitz (3) und mindestens eine Fussstütze (20) aufweist, **gekennzeichnet durch**:
- mindestens einen Haltegriff (5),
- eine Kupplungseinrichtung (9) enthaltend eine Befestigungsvorrichtung (18), welche eine Schwenkbewegung des Anhängers bezogen auf den Kinderwagen in wenigstens zwei Richtungen zulässt, mit wenigstens einem ersten und einem zweiten Gelenk (11, 12), wobei die Kupplungseinrichtung (9) an dem Kinderwagen (16) derart befestigbar ist, dass der Anhänger seitlich hinter dem Kinderwagen (16) befestigbar ist.

2. Anhänger nach Anspruch 1, **dadurch gekennzeichnet, dass** der Haltegriff (5) und der Sitz (3) in Bezug auf das Fahrwerk (6) derart übereinander angeordnet sind, dass das Kind in aufrechter Sitzposition transportiert werden kann.

3. Anhänger nach Anspruch 1 oder 2, **dadurch gekennzeichnet, dass** der Haltegriff (5) derart in Bewegungsrichtung (22) des Kinderwagens (16) vor dem Fahrwerk (6) angeordnet ist, dass die Verbindungslinie (17) zwischen Fahrwerk (6) und Haltegriff (5) in Montagelage bezogen auf die Vertikale unter einem Winkel weniger als 45° verläuft.

4. Anhänger nach Anspruch 3, **dadurch gekennzeichnet, dass** die Verbindungslinie (17) zwischen Fahrwerk (6) und Haltegriff (5) unter einem Winkel von 35°- 40° verläuft.

5. Anhänger nach einem der Ansprüchen 1 bis 4, **dadurch gekennzeichnet, dass** die Befestigungsvorrichtung (18) oberhalb der Höhe des Sitzes (3) vorgesehen ist.

6. Anhänger nach Anspruch 5, **dadurch gekennzeichnet, dass** die Befestigungsvorrichtung (18) etwa auf der Höhe des Haltegriffes (5) angeordnet ist.

7. Anhänger nach Anspruch 5, **dadurch gekennzeichnet, dass** die Befestigungsvorrichtung (18) über dem Haltegriffes (5) angeordnet ist.

8. Anhänger nach einem der Ansprüchen 1 bis 7, **dadurch gekennzeichnet, dass** der Sitz (3) entgegen der Bewegungsrichtung (22) des Kinderwagens (16) bogenförmig vom Rahmen (1) wegragend ausgebildet ist.

9. Anhänger nach einem der Ansprüchen 1 bis 8, **dadurch gekennzeichnet, dass** die Position des Sitzes (3) der Hälfte der Gesamthöhe des Anhängers entspricht.

10. Anhänger nach einem der Ansprüchen 1 bis 9, **dadurch gekennzeichnet, dass** die Höhe des Sitzes (3) einstellbar ist.

11. Anhänger nach einem der Ansprüchen 1 bis 10, **dadurch gekennzeichnet, dass** die Länge des Sitzes (3) für mindestens ein Kind ausgeführt ist.

12. Anhänger nach einem der Ansprüchen 1 bis 11, **dadurch gekennzeichnet, dass** der mindestens eine Haltegriff (5) am oberen Ende des Anhängers vorgesehen und/oder dass der mindestens eine Haltegriff (5) in der Höhe verstellbar ist.

13. Anhänger nach einem der Ansprüchen 1 bis 12, **dadurch gekennzeichnet, dass** die mindestens eine Fussstütze (20) am unteren Ende des Anhängers vorgesehen und/oder die mindestens eine Fussstütze (20) in der Höhe verstellbar ist.

14. Anhänger nach einem der Ansprüche 1 - 13, **dadurch gekennzeichnet, dass** die mindestens eine Fussstütze (20) als Verlängerung der Radachse (21) ausgebildet ist.

15. Anhänger nach einem der Ansprüche 1 bis 14, **dadurch gekennzeichnet, dass** die Befestigungsvorrichtung (18) an mindestens ein Rahmenelement (2) des Kinderwagens (16) montierbar ist.

16. Anhänger nach Anspruch 15, **dadurch gekennzeichnet, dass** die Befestigungsvorrichtung (18) als Schnellspanneinrichtung ausgeführt ist.

17. Anhänger nach einem der Ansprüche 1 bis 16, **dadurch gekennzeichnet, dass** das erste Gelenk (11) so ausgebildet ist, dass der Anhänger in Montagelage um eine vertikale Achse bewegbar ist.

18. Anhänger nach Anspruch 17, **dadurch gekennzeichnet, dass** der Drehpunkt des ersten Gelenkes (11) an der zum Kinderwagen (16) gerichteten Seite der Kupplungseinrichtung (9) vorgesehen ist.

19. Anhänger nach einem der Ansprüche 1 bis 18, **dadurch gekennzeichnet, dass** eine Rückstellfeder (13) zum Anheben des unbelasteten Kinderwagenanhängers vorgesehen ist.

20. Anhänger nach einem der Ansprüche 1 bis 19, **dadurch gekennzeichnet, dass** das zweite Gelenk (12) eine nach beiden Seiten quer zur Bewegungsrichtung (22) des Kinderwagens (16) durchführbare Bewegung (14) des Kinderwagenanhängers ermöglicht.

21. Anhänger nach Anspruch 20, **dadurch gekennzeichnet, dass** der Kinderwagenanhänger aus der Nachlaufstellung in eine neben dem Kinderwagen liegende Ruhestellung verschwenkbar ist.

22. Anhänger nach Anspruch 20, **dadurch gekennzeichnet, dass** der Drehpunkt des zweiten Gelenkes (12) an der zum Kinderwagenanhänger gerichteten Seite der Kupplungseinrichtung (9) vorgesehen ist.

## Claims

1. Trailer for carrying at least one child, which can be secured to a pushchair (16) and which has a chassis (6) with at least one wheel (19), a frame (1) and a fixing arrangement (18) for fixing the trailer to a pushchair (16), by which means the trailer can be connected to the frame (2) of the pushchair (16) and a seat (3) and at least one foot rest (20), **characterized in that**:
- it comprises at least one hand grip (5),
- it comprises a coupling device (9) containing a fixing device (18), which permits a swinging movement of the trailer relative to the pushchair in at least two directions, with at least a first and a second link (11, 12), by means of which the coupling device (9) can be fixed to the pushchair (16) in such a way, that the trailer can be fixed to one side at the rear of the pushchair (16).

2. Trailer according to claim 1, **characterized in that** the hand grip (5) and the seat (3) are arranged one above the other in relation to the chassis (6) in such a way, that the child can be conveyed in an upright sitting position.

3. Trailer according to claim 1 or 2, **characterized in that** the hand grip (5) is arranged in such a way in the direction of motion (22) of the pushchair (16) ahead of the chassis (6), that the connecting line (17) between the chassis (6) and the hand grip (5) in the mounted position subtends an angle less than 45° relative to the vertical.

4. Trailer according to claim 3, **characterized in that** the connecting line (17) between the chassis (6) and the hand grip (5) subtends an angle between 35° and 40°.

5. Trailer according to one of the claims 1 to 4, **characterized in that** the fixing device (18) is positioned above the height of the seat (3).

6. Trailer according to claim 5, **characterized in that** the fixing device (18) is arranged to be more or less at the height of the hand grip (5).

7. Trailer according to claim 5, **characterized in that** the fixing device (18) is arranged to be over the hand grip (5).

8. Trailer according to one of the claims 1 to 7, **characterized in that** the profile of the seat (3) takes the form of a curve profile on and protruding from the frame (1), facing away from the direction of motion (22) of the push chair (16).

9. Trailer according to one of the claims 1 to 8, **characterized in that** the position of the seat (3) corresponds to half the overall height of the trailer.

10. Trailer according to one of the claims 1 to 9, **characterized in that** the height of the seat (3) can be adjusted.

11. Trailer according to one of the claims 1 to 10, **characterized in that** the length of the seat (3) is adequate for at least one child.

12. Trailer according to one of the claims 1 to 11, **characterized in that** said at least one hand grip (5) is provided on the upper end of the trailer and/or that said at least one hand grip (5) can be adjusted in height.

13. Trailer according to one of the claims 1 to 12, **characterized in that** said at least one foot rest (20) is provided on the lower end of the trailer and/or that said at least one foot rest (20) can be adjusted in height.

14. Trailer according to one of the claims 1 to 13, **characterized in that** said at least one foot rest (20) is formed as an extension of the wheel axle (21).

15. Trailer according to one of the claims 1 to 14, **characterized in that** the fixing device (18) can be mounted on at least one frame element (2) of the push chair (16).

16. Trailer according to claim 15, **characterized in that** the fixing device (18) is provided as a rapid clamping device.

17. Trailer according to one of the claims 1 to 16, **characterized in that** the first link (11) is formed in such a way, that in the mounted position the trailer can be moved about a vertical axis.

18. Trailer according to claim 17, **characterized in that** the point of rotation of the first link (11) is provided on the side of the coupling device (9) facing the push chair (16).

19. Trailer according to one of the claims 1 to 18, **characterized in that** a return spring (13) is provided to lift the unloaded push chair trailer.

20. Trailer according to one of the claims 1 to 19, **characterized in that** the second link (12) facilitates a movement (14) of the push chair trailer towards both sides, perpendicular to the direction of motion (22) of the push chair (16).

21. Trailer according to claim 20, **characterized in that** the push chair trailer can be swung in from the trailer position to a retracted position adjacent to the push chair.

22. Trailer according to claim 20, **characterized in that** the point of rotation of the second link (12) is provided on the side of the coupling device (9) facing the push chair trailer.

## Revendications

1. Remorque apte à être fixé à une poussette (16), destiné à emmener au moins un enfant et comportant un châssis (6) pourvu d'au moins une roue (19), un cadre (1) et un dispositif de fixation (18) pour la fixation à la poussette (16), ladite remorque étant apte à être fixé au cadre de la poussette (16) et comportant un siège (3) et au moins un marchepied (20), **caractérisé par** :
- au moins une poignée (5), et
- un dispositif d'accouplement (9) qui comprend un dispositif de fixation (18) permettant un pivotement de la remorque dans au moins deux sens par rapport à la poussette, avec une première et une seconde articulation (11, 12), le dispositif d'accouplement (9) étant apte à être fixé à la poussette (16) de telle sorte que la remorque puisse être fixé sur le côté derrière celle-ci.

2. Remorque selon la revendication 1, **caractérisé en ce que** la poignée (5) et le siège (3) sont disposés l'un au-dessus de l'autre par rapport au châssis (6) de telle sorte que l'enfant puisse être transporté en position assise redressée.

3. Remorque selon la revendication 1 ou 2, **caractérisé en ce que** la poignée (5) est disposée devant le châssis (6), dans le sens de déplacement (22) de la poussette (16), de telle sorte que la ligne de liaison (17) entre le châssis (6) et la poignée (5), en position montée, définisse un angle de moins de 45° par rapport à la verticale.

4. Remorque selon la revendication 3, **caractérisé en ce que** la ligne de liaison (17) entre le châssis (6) et la poignée (5) définit un angle de 35°-40°.

5. Remorque selon l'une des revendications 1 à 4, **caractérisé en ce que** le dispositif de fixation (18) est prévu au-dessus de la hauteur du siège (3).

6. Remorque selon la revendication 5, **caractérisé en ce que** le dispositif de fixation (18) est disposé à peu près à la hauteur de la poignée (5).

7. Remorque selon la revendication 5, **caractérisé en ce que** le dispositif de fixation (18) est disposé au-dessus de la poignée (5).

8. Remorque selon l'une des revendications 1 à 7, **caractérisé en ce que** le siège (3) est conçu pour dépasser du cadre (1) suivant une forme courbe en sens inverse par rapport au sens de déplacement (22) de la poussette (16).

9. Remorque selon l'une des revendications 1 à 8, **caractérisé en ce que** la position du siège (3) correspond à la moitié de la hauteur totale dudite remorque.

10. Remorque selon l'une des revendications 1 à 9, **caractérisé en ce que** la hauteur du siège (3) est réglable.

11. Remorque selon l'une des revendications 1 à 10, **caractérisé en ce que** la longueur du siège (3) est conçue pour au moins un enfant.

12. Remorque selon l'une des revendications 1 à 11, **caractérisé en ce que** la ou les poignées (5) sont prévues sur l'extrémité supérieure de la remorque et/ou en ce que la ou les poignées (5) sont réglables en hauteur.

13. Remorque selon l'une des revendications 1 à 12, **caractérisé en ce que** le ou les marchepieds (20) sont prévus sur l'extrémité inférieure de l'accessoire et/ou le ou les marchepieds (20) sont réglables en hauteur.

14. Remorque selon l'une des revendications 1 à 13, **caractérisé en ce que** le ou les marchepieds (20) sont conçus comme un prolongement de l'essieu (21).

15. Remorque selon l'une des revendications 1 à 14, **caractérisé en ce que** le dispositif de fixation (18) est apte à être monté sur au moins un élément de cadre (2) de la poussette (16).

16. Remorque selon la revendication 15, **caractérisé en ce que** le dispositif de fixation (18) est conçu comme un dispositif à serrage rapide.

17. Remorque selon l'une des revendications 1 à 16, **caractérisé en ce que** la première articulation (11) est conçue pour que ladite remorque, en position montée, soit mobile autour d'un axe vertical.

18. Remorque selon la revendication 17, **caractérisé en ce que** le centre de rotation de la première articulation (11) est prévu sur le côté du dispositif d'accouplement (9) dirigé vers la poussette (16).

19. Remorque selon l'une des revendications 1 à 18, **caractérisé en ce qu'**il est prévu un ressort de rappel (13) pour soulever la remorque de poussette non chargé.

20. Remorque selon l'une des revendications 1 à 19, **caractérisé en ce que** la seconde articulation (12) permet un mouvement (14) de la remorque de poussette apte à être décrit des deux côtés transversalement par rapport au sens de déplacement (22) de la poussette (16).

21. Remorque selon la revendication 20, **caractérisé en ce que** la remorque de poussette est apte à pivoter de la position arrière vers une position de repos dans laquelle il se trouve près de la poussette.

22. Remorque selon la revendication 20, **caractérisé en ce que** le centre de rotation de la seconde articulation (12) est prévu sur le côté de l'accouplement (9) dirigé vers ladite remorque de poussette.
